(19) Europäisches Patentamt
European Patent Office
Office européen des brevets

(11) **EP 4 317 580 A1**

(12) **EUROPEAN PATENT APPLICATION**
published in accordance with Art. 153(4) EPC

(43) Date of publication:
**07.02.2024 Bulletin 2024/06**

(21) Application number: **22780224.6**

(22) Date of filing: **18.03.2022**

(51) International Patent Classification (IPC):
**D21H 13/50** (2006.01)   **D04H 1/4242** (2012.01)
**H01M 4/96** (2006.01)

(52) Cooperative Patent Classification (CPC):
**D04H 1/4242; D21H 13/50; H01M 4/96;** Y02E 60/50

(86) International application number:
**PCT/JP2022/012511**

(87) International publication number:
**WO 2022/210008 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 JP 2021063265**

(71) Applicant: **Toray Industries, Inc.**
**Tokyo 103-8666 (JP)**

(72) Inventors:
• **WATANABE, Tadataka**
**Otsu-shi, Shiga 520-2141 (JP)**
• **SODE, Katsuya**
**Otsu-shi, Shiga 520-2141 (JP)**
• **KAMEDA, Shunsuke**
**Otsu-shi, Shiga 520-2141 (JP)**
• **WAKATABE, Michio**
**Otsu-shi, Shiga 520-2141 (JP)**

(74) Representative: **Mewburn Ellis LLP**
**Aurora Building**
**Counterslip**
**Bristol BS1 6BX (GB)**

(54) **CARBON SHEET, METHOD FOR MANUFACTURING SAME, GAS DIFFUSION ELECTRODE, AND FUEL CELL**

(57)    An object of the present invention is to provide a carbon sheet to be used suitably for a gas diffusion electrode, in which the carbon sheet does not worsen the electrical resistance in the through-plane direction, and can be prevented from the deflection into the gas flow channels provided in the bipolar plate, although such characteristics. A carbon sheet according to the present invention, provided to achieve the above-described object, is a carbon sheet including a first surface and a second surface located at the opposite side to the first surface; wherein, assuming that a specific section is equally divided into 20 portions in the thickness direction to form 20 layers, the degree of fiber orientation of the first surface side outermost layer of the 20 layers is 1.20 or more and 3.00 or less; and wherein, assuming that a region composed of consecutive layers that are included in the 20 layers, and satisfy specific conditions is a first surface side region, and that a region composed of a layer(s) included in the 20 layers but not included in the first surface side region is a second surface side region, the thickness of the first surface side region is 40% or less of the thickness of the whole carbon sheet, and a difference between the average degree of fiber orientation of the second surface side region and the degree of fiber orientation of the first surface side outermost layer is larger than 0.10.

【Fig.1】

EP 4 317 580 A1

**Description**

TECHNICAL FIELD

The present invention relates to a carbon sheet and a method of producing the same, and to a gas diffusion electrode and a fuel cell.

BACKGROUND ART

In a polymer electrolyte fuel cell, a fuel gas containing hydrogen is supplied to an anode, and an oxidizing gas containing oxygen is supplied to a cathode, resulting in an electrochemical reaction caused across both electrodes to produce an electromotive force. A polymer electrolyte fuel cell is commonly constituted of a bipolar plate, gas diffusion electrode, catalyst layer, electrolyte membrane, catalyst layer, gas diffusion electrode, and bipolar plate that are laminated in this order. The gas diffusion electrode needs to have a high gas diffusivity for allowing the gas supplied from the bipolar plate to diffuse into the catalyst layer, a high water removal performance for allowing water generated through the electrochemical reaction to be discharged into the bipolar plate, and a high electrical conductivity for allowing the resulting electric current to be taken out. Because of this, a gas diffusion electrode having a microporous layer formed on the surface of a substrate is used widely, as which substrate an electrically conductive porous substrate composed of carbon fibers is used.

For the fuel gas (hydrogen gas at the anode side and the air or oxygen at the cathode side) to be supplied from the gas diffusion electrode to the catalyst layer efficiently, the fuel gas needs to be spread on the whole face of the gas diffusion electrode through gas flow channels provided in the adjacent bipolar plate. In addition, in order that the fuel gas which has reached the gas diffusion electrode from the bipolar plate can be diffused in the gas diffusion electrode efficiently, various suggestions are made about the structure of the gas diffusion electrode.

For example, a gas diffusion electrode in which a carbon sheet constituting the gas diffusion electrode has a fiber orientation is disclosed (Patent Literature 1).

In addition, a gas diffusion electrode in which two to eight carbon sheets having a fiber orientation are laminated is disclosed (Patent Literature 2).

In addition, a gas diffusion electrode in which a carbon sheet having a strong fiber orientation and a carbon sheet having a weak fiber orientation are laminated is disclosed (Patent Literature 3).

In addition, a gas diffusion electrode in which the fiber orientation is gradient in the thickness direction of a single layer is disclosed (Patent Literature 4).

Citation List

Patent Literature

Patent Literature 1: JP 2006-222024 A
Patent Literature 2: US 2017/0301923 A1
Patent Literature 3: JP 2013-191435 A
Patent Literature 4: KR 2016-0120060 A

SUMMARY OF INVENTION

Technical Problem

However, the invention described in Patent Literature 1 has a problem in that the fibers are strongly orientated throughout the whole carbon sheet, and have strength in the orientation direction, but have a lower strength in the direction perpendicular to the orientation direction of the fibers, and thus, are prone to cause breaking and tearing during transportation and processing. Another problem is that, in a case where the fibers are orientated strongly throughout the whole carbon sheet, the bending stiffness in the orientation direction of the fibers is strong, and disposing the fibers in such a manner that the fiber orientation is substantially perpendicular to the gas flow channels provided in the surface of the bipolar plate makes it possible to inhibit the deflection of the carbon sheet into the gas flow channels, and expect the effect of inhibiting a pressure loss during the supply of the fuel gas, but on the other hand, a resin carbide in the carbon sheet is unevenly distributed in the direction of the fibers, thus worsening the electrical resistance in the thickness direction (through-plane direction) of the carbon sheet.

The inventions described in Patent Literature 2 and Patent Literature 3 have a problem in that two or more layers of carbon sheets are laminated, and thus, delaminate during power generation, causing contact breakage to worsen the electrical resistance, and causing flooding at the portions of delamination to worsen the fuel cell performance. Another problem is that a plurality of carbon sheets are produced and then laminated, and thus, increase the number of processes of processing, resulting in decreasing the productivity.

The invention described in Patent Literature 4 has a problem in that the fiber orientation is gradient in the thickness direction (through-plane direction) in the single layer, but that the region in which the fibers are strongly orientated is not thick, and thus, the deflection of the carbon sheet into the gas flow channels is not inhibited sufficiently.

In view of the problems of conventional technologies, an object of the present invention is; to provide a carbon sheet that does not worsen the electrical resistance in the through-plane direction when used in a gas diffusion electrode, and can be prevented from the deflection into the gas flow channels provided in the bipolar plate; and to provide a gas diffusion electrode containing the carbon sheet, and provide a fuel cell containing the gas diffusion electrode.

Solution to Problem

To solve the above-described problems, the present invention has the following constitution. That is,

a carbon sheet according to the present invention is a carbon sheet including a first surface and a second surface located at the opposite side to the first surface; wherein, assuming that a section from a plane having a filling rate of 50% nearest to the first surface to a plane having a filling rate of 50% nearest to the second surface is equally divided into 20 portions in the thickness direction to form 20 layers, the degree of fiber orientation of the first surface side outermost layer of the 20 layers is 1.20 or more and 3.00 or less; and wherein, assuming that a region composed of consecutive layers included in the 20 layers and having a degree of fiber orientation having a difference within $\pm 0.10$ from the degree of fiber orientation of the first surface side outermost layer is a first surface side region, and that a region composed of a layer(s) included in the 20 layers but not included in the first surface side region is a second surface side region, the thickness of the first surface side region is 40% or less of the thickness of the whole carbon sheet, and a difference between the average degree of fiber orientation of the second surface side region and the degree of fiber orientation of the first surface side outermost layer is larger than 0.10 (wherein the filling rate of 50% refers to a value that is 50% of the average of filling rates of planes, wherein the filling rates of planes are measured at 3.9 $\mu$m intervals from one surface of the carbon sheet to the other surface, and the average is then determined from the filling rates obtained; and furthermore, the filling rate of a layer refers to the average of values obtained using the filling rates of planes forming the layer).

Advantageous Effects of Invention

The present invention makes it possible to provide a carbon sheet to be used suitably for a gas diffusion electrode, in which the carbon sheet does not worsen the electrical resistance in the through-plane direction, and can be prevented from the deflection into the gas flow channels provided in the bipolar plate, although such characteristics are conventionally difficult to provide.

BRIEF DESCRIPTION OF DRAWINGS

FIG. 1 is a schematic view of a fuel cell containing a gas diffusion electrode according to the present invention.
FIG. 2 is a schematic diagram of a method of evaluating the deflection of a gas diffusion electrode according to the present invention.
FIG. 3 is a schematic diagram illustrating the distribution of filling rates in the thickness direction in the measurement of the degree of fiber orientation in the thickness direction of a carbon sheet according to the present invention.
FIG. 4 is a schematic diagram illustrating the distribution of degree of fiber orientation of a carbon sheet according to the present invention.
FIG. 5 is a schematic diagram of the distribution of filling rates of a carbon sheet according to the present invention, in which the distribution is divided between a multilayer body X and a multilayer body Y.
FIG. 6 is a schematic diagram of one example of a papermaking machine that can control the fiber orientation of a carbon fiber papermaking substrate.

DESCRIPTION OF EMBODIMENTS

Embodiments of the present invention will be described below, and the present invention is not limited to these embodiments. In addition, for the reader to understand, some words and phrases used herein are accompanied by the reference signs used in the drawings, but the drawings illustrate examples only, and the present invention is not limited to the embodiments in the drawings.

[Carbon Sheet]

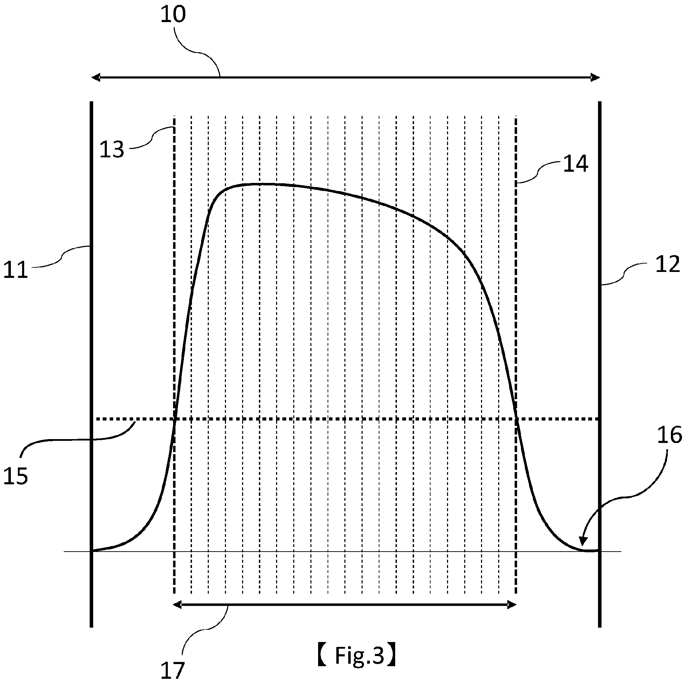

A carbon sheet 1 according to the present invention is a carbon sheet including a first surface 11 and a second surface 12 located at the opposite side to the first surface; wherein, assuming that a section from a plane 13 having a filling rate 15 of 50% nearest to the first surface to a plane 14 having a filling rate of 50% nearest to the second surface is equally divided into 20 portions in the thickness direction to form 20 layers 17, the degree of fiber orientation of the first surface side outermost layer of the 20 layers is 1.20 or more and 3.00 or less; and wherein, assuming that a region composed of consecutive layers included in the 20 layers and having a degree of fiber orientation having a difference within ±0.10 from the degree of fiber orientation of the first surface side outermost layer is a first surface side region 1-1, and that a region composed of a layer(s) included in the 20 layers but not included in the first surface side region is a second surface side region 1-2, the thickness of the first surface side region is 40% or less of the thickness of the whole carbon sheet, and a difference between the average degree of fiber orientation of the second surface side region and the degree of fiber orientation of the first surface side outermost layer is larger than 0.10. In the present invention, being "equally divided into 20 portions in the thickness direction to form 20 layers" means that a section from a plane having a filling rate of 50% nearest to the first surface of the carbon sheet to a plane having a filling rate of 50% nearest to the second surface is equally divided into 20 portions in the thickness direction 10 of the carbon sheet, as in FIG. 3. The thickness of the whole carbon sheet means the thickness of the section.

A carbon sheet according to the present invention is preferably porous. A carbon sheet that is porous makes it possible to achieve both an excellent gas diffusivity for allowing the gas supplied from the bipolar plate to diffuse into the catalyst and a high water removal performance for allowing water generated through the electrochemical reaction to be discharged into the bipolar plate. In addition, a porous material having electrical conductivity is preferably used in order to afford a high electrical conductivity for taking out an electric current generated. Examples of the porous material to be preferably used include porous materials containing carbon fibers, such as carbon fiber papermaking substrates, carbon fiber woven fabrics, and felt type carbon fiber non-woven fabrics. Among these, it is preferable to use, as a porous material, a carbon fiber papermaking substrate that has an excellent characteristic for absorbing a dimensional change in the through-plane direction of an electrolyte membrane, that is, a "spring property", enables the thickness of the porous material to be decreased, and makes it easier to control the state of the fiber orientation in the thickness direction. In addition, a carbon sheet according to the present invention is preferably in the form of a porous material with a bonding material added thereto, and is more preferably composed of a carbon fiber papermaking substrate and a bonding material. This enhances the stiffness of the carbon sheet, and the bonding material playing the role of an electrically conductive path makes it possible to enhance the electrical conductivity.

In the present invention, the filling rate refers to a ratio of the area occupied by a constituent of a carbon sheet to the whole area of a face of a slice obtained by slicing the carbon sheet along a plane vertical to the thickness direction. That is, the filling rate is a ratio of the areal occupancy of the portions excluding pores inside a carbon sheet. The details of a method of measuring the filling rate will be described below. The filling rate of 50% refers to a value that is 50% of the average of filling rates of planes, wherein the filling rates of planes are measured at intervals of a given thickness from one surface of the carbon sheet to the other surface, and the average is then determined from the filling rates obtained. Furthermore, the filling rate of a layer refers to the average of values obtained using the filling rates of the planes forming the layer.

Assuming that, in a carbon sheet according to the present invention, the section from the plane having a filling rate of 50% nearest to the first surface to the plane having a filling rate of 50% nearest to the second surface is equally divided into 20 portions in the thickness direction to form 20 layers, the degree of fiber orientation of the first surface side outermost layer is 1.20 or more and 3.00 or less, more preferably 1.35 or more and 2.80 or less. Bringing the degree of fiber orientation of the first surface side outermost layer to 1.20 or more makes it possible to enhance the bending stiffness, and inhibit the deflection into the gas flow channels provided in the bipolar plate. Bringing the degree of fiber orientation to 3.00 or less enables the gas diffusion electrode to have an excellent electrical resistance in the through-plane direction. In addition, if the degree of fiber orientation of the first surface side outermost layer is less than 1.20, the electrical resistance is low, but the effect of inhibiting the deflection is not achieved.

Assuming that a region composed of consecutive layers included in the above-described 20 layers and having a degree of fiber orientation having a difference within ±0.10 from the degree of fiber orientation of the first surface side outermost layer is a first surface side region, the thickness of the first surface side region is 40% or less of the thickness of the whole carbon sheet, preferably 20% or less, more preferably 10% or less. Bringing the thickness of the first surface side region to 40% or less of the thickness of the whole carbon sheet makes it possible to obtain the effect of inhibiting the deflection, and enables the gas diffusion electrode to have an excellent electrical resistance. On the other hand, if the thickness of the first surface side region is more than 40%, the effect of inhibiting the deflection is further obtained, but the strength in the vertical direction of the fiber orientation direction is decreased, thus causing breaking, decreasing the dimensional stability during processing, and worsening the electrical resistance during power generation.

In addition, assuming that, in a carbon sheet according to the present invention, a region composed of a layer(s) included in the above-described 20 layers but not included in the first surface side region is a second surface side region, a difference between the degree of fiber orientation of the first surface side outermost layer and the average degree of fiber orientation of the second surface side region is larger than 0.10. Having a difference larger than 0.10 in the degree of fiber orientation makes it possible to inhibit breaking due to a decrease in the strength in the fiber orientation direction and in the vertical direction, and inhibit a decrease in the dimensional stability during processing. Furthermore, disposing the first surface side region at the bipolar plate side makes it possible to inhibit the deflection into the gas flow channels provided in the bipolar plate.

A difference between the degree of fiber orientation of the second surface side outermost layer and the degree of fiber orientation of each layer in the second surface side region is preferably within ±0.10. The difference within ±0.10 makes it possible that the resulting uniform network structure prevents the electrical resistance from worsening.

For a carbon sheet according to the present invention, it is preferable that the average degree of orientation of the second surface side region is 1.20 or less. Bringing the average degree of orientation of the second surface side region within the range makes it possible to secure intersections among the fibers, increase the electrically conductive paths, and thereby inhibit the electrical resistance from worsening.

In a carbon sheet according to the present invention, a difference between the fiber orientation angle of the first surface side outermost layer and the fiber orientation angle of the second surface side outermost layer is preferably within 45°, more preferably within 30°. Having the difference within 45° in the fiber orientation angle between both faces results in having the fibers of both faces in substantially the same direction, thus making it possible to obtain the effect of inhibiting the deflection.

As used herein, the "degree of fiber orientation" is defined by a strength developed by a fiber orientation angle, assuming that the fiber orientation angle is the most frequent angle of a fiber in a two-dimensional plane in the carbon sheet. In the present invention, the degree of fiber orientation and the fiber orientation angle are measured with the fiber orientation measurement software (image analysis software (ver 8.03) for measuring the fiber orientation of paper and non-woven fabric, produced by Professor Toshiharu Enomae, the School of Life and Environmental Sciences, the University of Tsukuba; HP: http://www.enomae.com/FiberOri/index.htm). With the fiber orientation measurement software, a degree of fiber orientation nearer to 1.00 (the lower limit value) means a degree nearer to non-orientation, and a larger value means a stronger fiber orientation. In addition, in respect of the fiber orientation angle, the fiber orientation angle is 90° in a case where many of the fibers in the image are oriented upward on the screen, the fiber orientation angle is 0° in a case where many or the fibers are slanted rightward on the screen, and the fiber orientation angle is 180° in a case where many of the fibers are slanted leftward on the screen. Because of this, the direction in which an image is projected on the screen and an actual direction of the sheet need to be determined preliminarily.

[Measuring Procedures for Fiber Orientation and Filling Rate]

A carbon sheet (the dimensions: 10 mm in length × 5 mm in width) is set in a three-dimensional measurement X-ray CT (the product name, TDM1000H-CF, manufactured by Yamato Scientific Co., Ltd.), and scanned 360° with the longitudinal axis set as the axis of rotation to produce a 3D image of "4 mm × 4 mm × thickness of sheet [mm]". In the below-described EXAMPLES, images were photographed at a tube voltage of 60 kV and a tube current of 60 μA. When this is done, the image of each of the slices constituting the 3D image is made to have a thickness of 3.9 μm. Next, using image analysis software accessory to the above-described X-ray CT, the 3D image is equally divided into 20 portions in the thickness direction to produce 20 layers. When this is done, it is necessary to determine a section to be divided into 20 layers. First, all the slice images constituting the 3D image are outputted from the image analysis software accessory to the X-ray CT. Next, each slice image obtained is binarized to distinguish the carbon sheet from the background portion including no carbon sheet. For example, using an image processing program, "ImageJ (ver 1.53a), HP: https://imagej.nih.gov/ij/)", each slice image obtained is divided according to the luminance in 1 to 255 stages, and is binarized using, as the threshold of the luminance, a point at which the degree of separation is the highest between two peaks obtained by drawing a gray level histogram (the Otsu's method). That is, the image is separated into the dark-luminance side (background) and the bright-luminance side (the constituent of the carbon sheet). In the whole area per slice image, the ratio of the area of the bright side binarized is regarded as a filling rate [%]. Next, the filling rates of the slice images are plotted from one surface of the carbon sheet to the other surface to verify a distribution of filling rates 16. Among the distributions of filling rates thus obtained, the average of the values of the regions having a filling rate of more than 0% is calculated, and a value of 50% of the average is regarded as a 50% filling rate. A plane 13 having a filling rate of 50% nearest to the first surface of the carbon sheet and a plane 14 having a filling rate of 50% nearest to the second surface are determined, and then, a section sandwiched between the two planes having a filling rate of 50% as determined is equally divided into 20 portions to form 20 layers. A plan view of each of the 20 layers observed in the through-plane direction was produced, and this plan view is inputted in the above-described fiber orientation measurement software to calculate the degree of fiber orientation and the fiber orientation angle.

In this regard, to evaluate the filling rate and degree of fiber orientation of a carbon sheet, a plurality of measurements are taken to calculate an average value. In the below-described EXAMPLES, 30 different parts of a carbon sheet were sampled, and measured to calculate an average value.

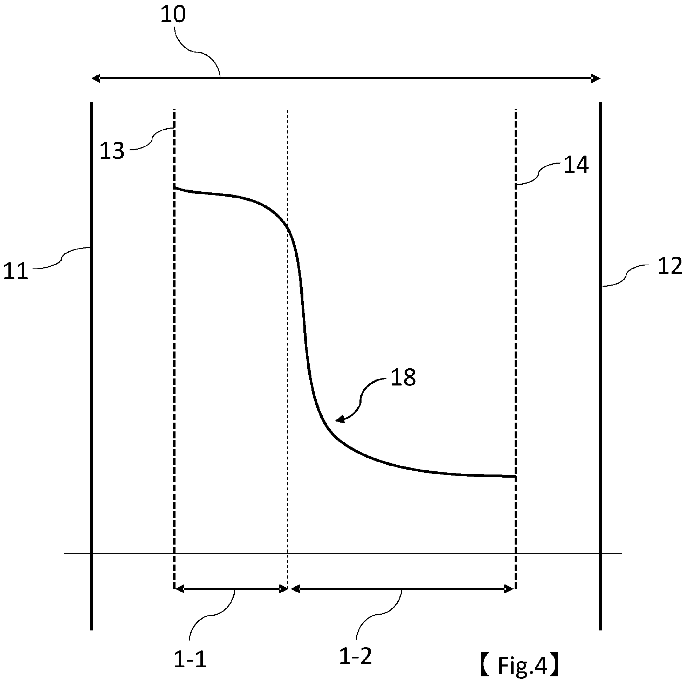

In the above-described method of analysis, the thickness [%] of the first surface side region, the thickness [%] of the second surface side region, and the degree of fiber orientation of each layer can be clarified, as in FIG. 4.

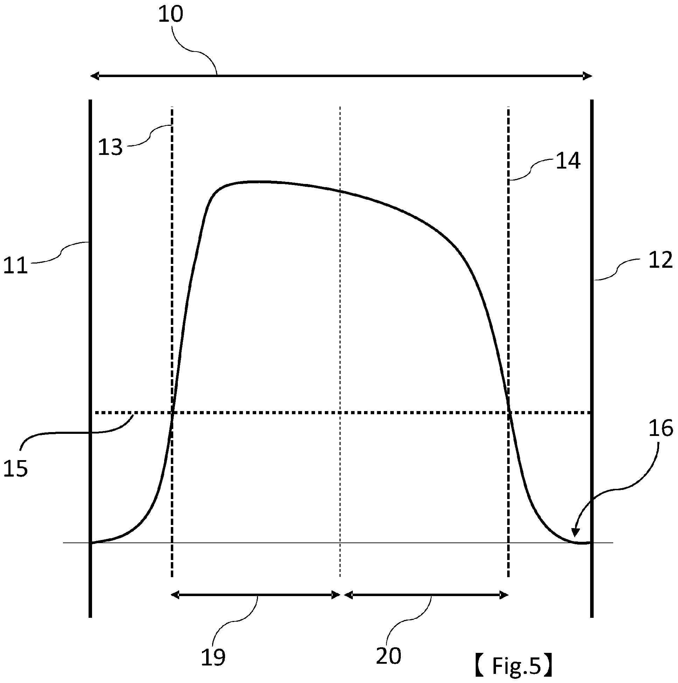

Assuming that, in a carbon sheet according to the present invention, a section from a plane having a filling rate of 50% nearest to the first surface to a plane having a filling rate of 50% nearest to the second surface is equally divided into two portions in the thickness direction to form two multilayer bodies, as in FIG. 5, and that the first surface side multilayer body is a multilayer body X19, and the second surface side multilayer body is a multilayer body Y20, the filling rate of the multilayer body Y is preferably lower than the filling rate of the multilayer body X.

Here, the filling rate of each multilayer body refers to the average of the filling rates of the layers contained in each multilayer body. In addition, the multilayer body X contains the 1st to 10th layers from the first surface side according to the present invention, and the multilayer body Y contains the 11th to 20th layers.

Allowing the filling rate of the multilayer body X to be higher than the filling rate of the multilayer body Y increases the amount of a bonding material in the multilayer body X side region to have a rigid plane, as described in the below-described [Resin Impregnation Process]. Accordingly, when a carbon sheet according to the present invention is used for a gas diffusion electrode of a fuel cell, disposing the multilayer body X side at the bipolar plate side makes it possible to inhibit the deflection into the gas flow channels provided in the bipolar plate.

Furthermore, assuming that a section from a plane having a filling rate of 50% nearest to the first surface to a plane having a filling rate of 50% nearest to a second surface, as defined above, is divided into three portions in the thickness direction to obtain multilayer bodies, that the first surface side multilayer body is a multilayer body X', that the second surface side multilayer body is a multilayer body Y', and that a multilayer body between the multilayer body X' and the multilayer body Y' is a multilayer body Z', a form in which the multilayer body X', the multilayer body Y', and the multilayer body Z' are lower in this order is more preferable. Here, the multilayer body X' contains the 1st to 7th layers from the first surface side according to the present invention, the multilayer body Y' contains the 14th to 20th layers, and the multilayer body Z' contains the 8th to 13th layers. In a case where the multilayer body Z has a lower filling rate than the other two multilayer bodies, the diameter of a pore present in the multilayer body Z' is larger, the gas diffusivity is enhanced, and furthermore, the multilayer body X' has a higher filling rate than the multilayer body Z'. Thus, the carbon sheet is less prone to be bent with a bipolar plate pressed thereagainst, making it possible to obtain a gas diffusion electrode having both power generation characteristics and mechanical properties. In addition, the multilayer body X or the multilayer body X' that has a high filling rate is at the first surface side having a higher degree of fiber orientation, and thus, makes it possible to more strongly prevent the deflection.

In this regard, in the present invention, the "thickness" used when the filling rate and the degree of fiber orientation are measured is represented by a no-pressure thickness measured by an X-ray CT analysis, that is, under no pressing, and is different from the "pressed thickness" obtained by the below-described measurement under a pressure of 0.15 MPa.

In this regard, it is also possible to separate the carbon sheet from the gas diffusion electrode, and measure the degree of fiber orientation and filling rate of a carbon sheet. For example, a gas diffusion electrode is heated at 500°C in the air for 60 minutes, so that the resin composition contained in the microporous layer in the gas diffusion electrode is oxidatively decomposed. Then, the gas diffusion electrode is ultrasonicated in ethanol, and dried to remove remnants from the microporous layer, so that a carbon sheet can be taken out.

In addition, a carbon sheet according to the present invention preferably has a density in the range of from 0.20 to 0.40 $g/cm^3$, more preferably in the range of from 0.22 to 0.35 $g/cm^3$, still more preferably in the range of from 0.24 to 0.31 $g/cm^3$. The density of 0.20 $g/cm^3$ or more can make the water vapor diffusion smaller, and inhibit the dry-out. In addition, such a carbon sheet has an enhanced mechanical strength, and can support the electrolyte membrane and the catalyst layer sufficiently when used as a gas diffusion electrode of a fuel cell. In addition, the electrical conductivity is higher, and the fuel cell performance is enhanced. On the other hand, the density of 0.40 $g/cm^3$ or less enhances the water removal performance, making it possible to inhibit flooding.

A carbon sheet having such a density is obtained by controlling the areal weight of the carbon fibers, the amount of the resin component blended in the carbon fibers, and the thickness of the carbon sheet in accordance with a method described in the below-described [Method of Producing Carbon Sheet]. Here, the density of a carbon sheet can be determined by dividing the areal weight (mass per unit area) of a carbon sheet weighed out using an electronic balance by the pressed thickness of a carbon sheet pressed at a pressure of 0.15 MPa.

A carbon sheet according to the present invention preferably has a pressed thickness of 50 to 230 $\mu$m, more preferably 70 to 210 $\mu$m, still more preferably 90 to 190 $\mu$m. The carbon sheet having a pressed thickness of 230 $\mu$m or less results in increasing the gas diffusion, and also facilitates the discharge of generated water. Furthermore, such a thickness makes it easier to decrease the size of the whole fuel cell. On the other hand, the carbon sheet having a pressed thickness of 50 $\mu$m or more results in enhancing the gas diffusivity in the in-plane direction inside the carbon sheet, and enhancing the fuel cell performance.

In this regard, the pressed thickness of a carbon sheet according to the present invention is determined by the below-described method. That is, a carbon sheet is placed on a smooth surface plate, and a difference in the height between the presence of the measuring object under a pressure of 0.15 MPa and the absence of the measuring object (zero point) is measured. Ten samples are taken from different parts, and the average of the measured values of the differences in the height is regarded as a pressed thickness.

Examples of a carbon fiber to be used for a carbon sheet according to the present invention include carbon fibers such as are polyacrylonitrile (PAN)-based, rayon-based, and pitch-based. Among these, PAN-based carbon fibers and pitch-based carbon fibers are preferably used in the present invention because of the excellent mechanical strength. In addition, flame resistant threads to become carbon fibers may be used in a carbonization process. In addition, conventionally known natural fibers or synthetic fibers, such as rayon fibers, acrylic fibers, or cellulose fibers, may be mixed in.

For a carbon fiber to be used in the present invention, the mean diameter of the monofilament is preferably in the range of from 3 to 20 $\mu$m, more preferably in the range of from 5 to 10 $\mu$m. The monofilament having a mean diameter of 3 $\mu$m or more results in having a larger pore diameter to enhance the water removal performance, making it possible to inhibit flooding. On the other hand, the monofilament having a mean diameter of 20 $\mu$m or less makes it easier to control the thickness of each of a carbon sheet and a gas diffusion electrode within a preferable range.

In a case where a carbon fiber papermaking substrate to be preferably used in the present invention is used for a carbon sheet, a monofilament of the carbon fiber preferably has an average length in the range of from 3 to 20 mm, more preferably in the range of from 5 to 15 mm. The monofilament having an average length of 3 mm or more results in a carbon sheet and a gas diffusion electrode that have excellent mechanical strength, electrical conductivity, and thermal conductivity. On the other hand, the monofilament having an average length of 20 mm or less affords a carbon sheet and a gas diffusion electrode that are uniform in quality.

[Method of Producing Carbon Sheet]

A method of producing a carbon sheet according to the present invention preferably includes: a mixing process of dispersing carbon fiber bundles uniformly in liquid to obtain a slurry; and a papermaking process of overlapping the carbon fibers at least continuously, and simultaneously making paper from the slurry containing carbon fibers, using a papermaking machine having a mechanism that can control the orientation in the thickness direction.

Examples of a producing method will be below described as preferable embodiments, and the present invention is not limited to the description below.

[Mixing Process and Papermaking Process]

As one example of a method of producing a carbon sheet according to the present invention, a method of producing a carbon fiber papermaking substrate will be described, in which method carbon fiber bundles are dispersed in an aqueous solution to produce a slurry, and the slurry produced is made into a sheet by a wet papermaking method. The aqueous solution in which carbon fibers are dispersed preferably contains a defoamer agent, surfactant, or thickening agent. The defoamer agent is that which inhibits foaming during stirring, and is preferably urethane-based, polyoxyalkylene-based, or silicone-based, without particular limitation. The surfactant is effective to defiberize carbon fiber bundles, and is preferably polyethylene glycol-based or polyethylene oxide-based, without particular limitation. The thickening agent is effective to increase the viscosity of an aqueous solution, and inhibit the physical contact of the carbon fibers, and is preferably polyethylene oxide-based or polyacrylic acid-based, without particular limitation. The viscosity of the aqueous solution in which carbon fibers are dispersed is preferably 5 to 50 mPa·s, particularly preferably 8 to 20 mPa-s, considering the dispersibility of the carbon fibers and the freeness during papermaking. The viscosity of less than 5 mPa·s is low, and causes the reaggregation of carbon fibers in some cases. The viscosity higher than 50 mPa·s can inhibit the reaggregation of carbon fibers, but decreases the speed at which the carbon fiber bundles are unraveled, and in addition, worsens the freeness during papermaking to result in excessive water, thus causing breaking during transportation and poor adhesion of the binder resin. Carbon fiber bundles are dispersed in the above-described aqueous solution to obtain a slurry.

Examples of a method to be used to obtain, from the slurry, wet paper as a base substrate for a carbon fiber papermaking substrate include a wet papermaking method in which carbon fibers and an aqueous solution in a slurry are separated to form the carbon fibers into a sheet, using a papermaking machine, such as a fourdrinier paper machine, cylindrical paper machine, or inclined paper machine. It is particularly preferable to use an inclined paper machine that makes it easier to control the fiber orientation, and enables the reaggregation to be inhibited by decreasing the concentration of the carbon fibers in the slurry. In adjusting the areal weight and thickness of a carbon fiber papermaking substrate using a wet papermaking method, an areal weight and a thick that are of interest can be achieved by adjusting the concentration of a slurry to be fed to the papermaking machine, the flow rate of the slurry, and the speed of the wire mesh of papermaking. Examples of a wet papermaking method include single-layer paper making and multi-layer paper making in which two or more layers of wet paper are laminated. Single-layer paper making is preferable, considering production stability and production cost.

In a wet papermaking method, controlling the fiber orientation by the below-described fiber orientation control method makes it possible to afford a fiber orientation to a carbon fiber papermaking substrate.

One example of a method of controlling the fiber orientation will be described. The fiber orientation of a carbon fiber papermaking substrate is determined on the basis of a speed (a slurry velocity) at which a fiber slurry flows in a papermaking machine and a speed of a wire mesh of papermaking 23 with which fibers are overlapped to form wet paper 24. Controlling these speeds makes it possible to control the fiber orientation, and in a papermaking process, a ratio, "jet-to-wire speed ratio", between the velocity of a slurry and the speed of the wire mesh of papermaking is used to set the control conditions.

$$\text{Jet-to-wire speed ratio} = \text{slurry velocity [m/min]} / \text{speed [m/min] of wire mesh}$$

$$\text{of papermaking (Formula 1)}$$

Usually, the closer to 1 the jet-to-wire speed ratio, the weaker the fiber orientation, and the farther from 1 the ratio, the stronger the fiber orientation. In a case where the fiber orientation is desired to be stronger, a method in which the jet-to-wire speed ratio is made either larger or smaller than 1 is possible. The jet-to-wire speed ratio smaller than 1 enables liquid feeding equipment, such as a pump, to be smaller, and thus, is preferable.

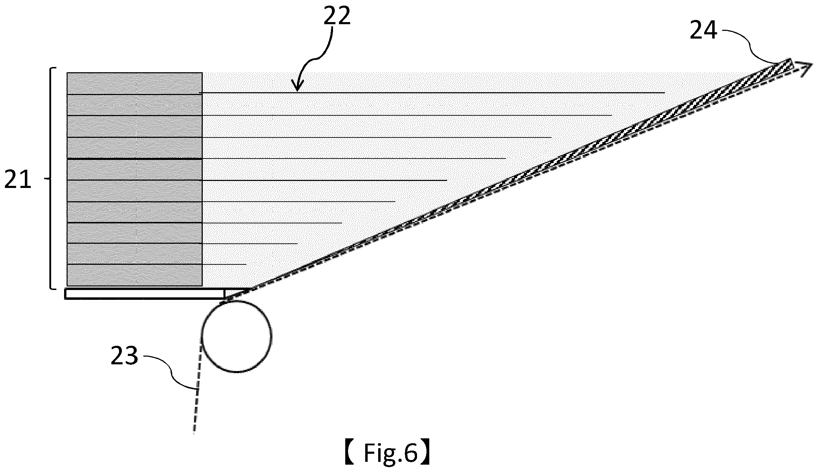

Examples of a method of adjusting a fiber orientation distribution 18 in the thickness direction of a carbon fiber papermaking substrate include; a method in which the jet-to-wire speed ratio is changed at every stage when the fibers are overlapped on a wire mesh of papermaking; for example, a method in which, in a portion for feeding a slurry into a papermaking machine, a plurality of slurry outlets 21 are disposed in the height direction, and the flow rate of the slurry being fed from each slurry outlet is individually adjusted in the feed. The schematic diagram is illustrated in FIG. 6. Designing as in FIG. 6 makes it possible to finely adjust the jet-to-wire speed ratio in the thickness direction of the carbon fiber papermaking substrate, and to control the degree of fiber orientation and distribution in the thickness direction of the carbon fiber papermaking substrate. For example, in a case where the fiber orientation of one face of the carbon fiber papermaking substrate is desired to be strong, the fiber orientation can be made strong by adjusting the flow rate of the slurry at the slurry outlet disposed in the upper portion of the papermaking machine or the bottom portion of the papermaking machine, and making the jet-to-wire speed ratio smaller than 1. Because of this, one method in which a difference between the fiber orientation angle of the first surface side outermost layer and the fiber orientation angle of the second surface side outermost layer is made 45° or less to orientate the fibers in the same direction is a method in which the fibers can be orientated by adjusting the flow rate of the slurry at the upper portion of the papermaking machine and the bottom portion of the papermaking machine.

Alternatively, diluting the slurry with an aqueous solution for dispersion, and adjusting the concentration and feeding amount of the resulting slurry before the slurry is fed to each slurry outlet also makes it possible to achieve the same areal weight even if the jet-to-wire speed ratio varies. In addition, as in FIG. 6, extending a partition plate 22 so as to section off an adjacent slurry outlet makes it less likely that the flows of a slurry discharged out of the slurry outlets interfere with each other, thus making it possible to more accurately control the degree of fiber orientation and the distribution.

To adjust the degree of fiber orientation and the distribution finely in the thickness direction, it is preferable that the number of the slurry outlets is preferably 3 to 15, more preferably 5 to 10. In some of the cases where the number of the slurry outlets is smaller than 3, it is difficult to finely control the orientation in the thickness direction, and in some of the cases the number is more than 15, the equipment results in being larger, making the operation complicated.

Beside the control methods illustrated above, controlling the height of the level of the slurry liquid flowing in a papermaking machine and the viscosity of the slurry liquid makes it possible to control the fiber orientation.

To wet paper obtained by papermaking, a binder resin is commonly added to maintain the shape of a carbon fiber papermaking substrate. For this addition, for example, a method of coating wet paper with a binder resin is used, and in this case, various commercially available coating devices can be used. Examples of a coating method that can be used include a method such as with a spray coater, curtain coater, or die coater. The above-described examples of coating methods are illustrative only, and not necessarily limitative.

The wet paper having a binder resin added thereto is preferably dried at a temperature of 100 to 180°C. Examples of a drying method that can be used include a drying method such as with a commonly used multi-cylinder dryer, yankee dryer, or hot air drying. The above-described examples of drying methods are illustrative only, and not necessarily limitative. In addition, the wet paper is preferably dried with hot air while supported by a heat resistant conveyor belt, heat-resistant mesh, heat resistant felt, or the like during transportation.

In the present invention, the carbon fibers of a carbon fiber papermaking substrate preferably have an areal weight in the range of from 10 to 50 g/m$^2$, more preferably in the range of from 15 to 35 g/m$^2$, still more preferably in the range of from 20 to 30 g/m$^2$. Having 10 g/m$^2$ or more as the areal weight of the carbon fibers in a carbon fiber papermaking substrate allows the carbon sheet to have an excellent mechanical strength. In addition, having 50 g/m$^2$ or less as the areal weight of the carbon fibers allows the carbon sheet to have excellent gas diffusivity and water removal performance in the in-plane direction.

Here, the areal weight of the carbon fibers in a carbon fiber papermaking substrate can be determined as follows: a carbon fiber papermaking substrate cut out to 10 cm square is held under a nitrogen atmosphere at a temperature of 450°C in an electric furnace for 15 minutes; and the mass of a residue obtained by removing organic substances is divided by the area (0.01 m$^2$) of the carbon fiber papermaking substrate.

A method of producing a carbon sheet according to the present invention preferably includes: a resin impregnation process of adding a resin to a carbon sheet, that is, a carbon fiber papermaking substrate, obtained by the above-described mixing process and papermaking process; a heating and pressing process of adjusting the thickness by heating and pressing; and a baking process of carbonizing the carbon sheet having the resin added thereto. Below, each process will be described.

[Resin Impregnation Process]

One of the preferable aspects of a method of producing a carbon sheet according to the present invention is to allow a porous material containing carbon fibers to be impregnated with a resin composition that becomes a bonding material.

In the present invention, the bonding material in the carbon sheet refers to a component other than the carbon fibers in the carbon sheet, and mainly plays a role in bonding the carbon fibers to each other. Examples of the bonding material include: a resin composition with which a porous material containing carbon fibers is impregnated; or a carbide of the porous material. In the present invention, a porous material containing carbon fibers and impregnated with a resin composition that becomes a bonding material is referred to as a "prepreg" in some cases.

In the present invention, a resin composition to be used in the production of a prepreg contains a resin component and, as required, a solvent or the like. Here, the resin component contains a resin such as a thermosetting resin or a thermoplastic resin, and further contains an additive such as carbon powder or a surfactant, as required.

The carbonization yield of the resin component contained in the resin composition is preferably 40 mass% or more. Carbonization refers to bringing about a state in which carbon is left when a substance is burnt while oxygen is blocked thereto. The carbonization yield is represented by the ratio of the mass of the amount of the carbon left to the mass of the original resin component. The carbonization yield of 40 mass% or more makes it more likely that the carbon sheet has excellent mechanical properties, electrical conductivity, and thermal conductivity. The carbonization yield of the resin component contained in the resin composition is not particularly subject to any upper limit, and is usually approximately 60 mass%.

A resin constituting the resin component in the resin composition is preferably a thermosetting resin, such as a phenol resin, epoxy resin, melamine resin, furan resin, or the like. Among these, a phenol resin is particularly preferably used because of the high carbonization yield.

In addition, for example, carbon powder is added as an additive to the resin component in the resin composition, if desired, for the purpose of enhancing the mechanical properties, electrical conductivity, and thermal conductivity of the carbon sheet. Here, examples of the carbon powder that can be used include: carbon blacks such as furnace black, acetylene black, lamp black, and thermal black; graphites such as flake graphite, scaly graphite, earthy graphite, artificial graphite, expanded graphite, and flaky graphite; carbon nanotubes; carbon nanofibers; milled fibers of carbon fibers; and the like.

The resin composition can be used directly, or, if desired, the resin component can contain any kind of solvent from the viewpoint of enhancing the impregnation capability to a porous material such as a carbon fiber papermaking substrate. Here, examples of the solvent that can be used include methanol, ethanol, isopropyl alcohol, and the like.

The state of the resin composition is preferably liquid at 25°C at 0.1 MPa. The resin composition in liquid form has an excellent impregnation capability to a porous material such as a carbon fiber papermaking substrate, and allows the resulting carbon sheet to have excellent mechanical properties, electrical conductivity, and thermal conductivity.

When impregnated, the porous material is preferably impregnated with the resin composition in such a manner that the amount of the resin component is 30 to 400 parts by mass, more preferably 50 to 300 parts by mass, with respect to 100 parts by mass of the carbon fibers in the prepreg. With respect to 100 parts by mass of the carbon fibers in the prepreg, impregnating with the resin component in an amount of 30 parts by mass or more allows the carbon sheet to have excellent mechanical properties, electrical conductivity, and thermal conductivity. On the other hand, with respect to 100 parts by mass of the carbon fibers in the prepreg, impregnating with the resin component in an amount of 400 parts by mass or less allows the carbon sheet to have excellent gas diffusivity in the in-plane direction and excellent gas diffusivity in the through-plane direction.

In the present invention, examples of a method to be used to allow a porous material containing carbon fibers to be impregnated with a resin composition include: a method in which a porous material containing carbon fibers is dipped in a resin composition containing a solvent; a method in which a porous material containing carbon fibers is coated with a resin composition containing a solvent; a method in which a layer composed of a resin composition is formed on a film for delamination, and the layer composed of the resin composition is transferred to a porous material containing carbon fibers; and the like. Among these, a method in which a porous material containing carbon fibers is dipped in a resin composition having a solvent added thereto is particularly preferably used, because of the excellent productivity. Allowing the resin composition to adhere to the whole of the prepreg enables the bonding material to adhere to the whole of the carbon sheet obtained, and thus, can enhance the strength of the carbon sheet.

As above-described, it is preferable for a carbon sheet according to the present invention that the filling rate of the multilayer body Y is lower than the filling rate of the multilayer body X. Such a carbon sheet can be obtained, for example, by impregnating a porous material with a resin composition in such a manner that a resin composition with which the multilayer body Y is impregnated is in a smaller amount than a resin composition with which the multilayer body X is impregnated. Because of this, the whole porous material containing carbon fibers is impregnated uniformly with the resin composition as a bonding material by dipping or the like, the excessively adhering resin composition is then removed from one face of the porous material before drying, and the amount of the resin composition is thus controlled in the through-plane direction of the carbon sheet while the resin composition is distributed, whereby the filling rate of each multilayer body can be controlled.

For example, a porous material containing carbon fibers is dipped in a solution containing a resin composition to obtain a prepreg, then the solution containing the resin composition is sucked up on one face before drying, or the prepreg is sandwiched between different rolls having different surface structures to be squeezed, whereby the amount of the resin composition adhering near to the one face can be varied with respect to the amount of the resin composition adhering near to the other face while a bonding material is thus allowed to adhere wholly.

In addition, in another example, a porous material containing carbon fibers is dipped in a solution containing a resin composition to obtain a prepreg, and then, only one face of the prepreg is coated additionally with the resin composition using a spray, gravure roll, or the like, or one face is dried when the prepreg is dried after being dipped in the resin, whereby the value of the filling rate can be controlled to be different between one face of the carbon sheet and the other.

[Heating and Pressing Process]

In the present invention, the prepreg is preferably heated and pressed. Heating and pressing makes it possible to increase the viscosity of the resin composition, to partially cross-link the resin composition in the prepreg, and thus to adjust the thickness and density of the carbon sheet to values of interest. Examples of the heating and pressing method that can be used include a method of pressing with a heated hot platen, roll, or belt. An unwinding device or a wind-up device may be provided before and/or after this heating and pressing device. Providing such a device enables the prepreg to be heated and pressed continuously. In order that the resin composition in the prepreg can be increased in the viscosity and cross-linked, an additional heating treatment with hot air or the like may be performed.

[Baking Process]

In the present invention, allowing a porous material containing carbon fibers to be impregnated with a resin composition to obtain a prepreg is preferably followed by baking in an inert atmosphere to carbonize the resin composition. For this baking, a batch type of heating furnace can be used, or a continuous type of heating furnace can be used.

The highest temperature for baking is preferably in the range of from 1300 to 3000°C. The highest temperature of 1300°C or more advances the carbonization of the resin component in the prepreg, and allows the carbon sheet to have excellent electrical conductivity and thermal conductivity. On the other hand, with the highest temperature at 3000°C or less, the operation cost for a heating furnace is low.

In the present invention, a prepreg carbonized is referred to as a "carbon fiber sintered substrate" in some cases. That is, the carbon fiber sintered substrate corresponds to a carbon sheet. Both a carbon fiber sintered substrate before a hydrophobic treatment and a carbon fiber sintered substrate after a hydrophobic treatment each correspond to a carbon sheet.

[Hydrophobic Treatment]

In the present invention, for the purpose of enhancing the water removal performance, the carbon fiber sintered substrate preferably undergoes a hydrophobic treatment. A hydrophobic treatment can be performed by coating a carbon fiber sintered substrate with a hydrophobic material, and annealing the resulting substrate. In this regard, performing a hydrophobic treatment can afford a carbon sheet containing a hydrophobic material as a bonding material.

As the hydrophobic material, a fluorine-based polymer is preferably used because of the excellent corrosion resistance. Examples of the fluorine-based polymer include polytetrafluoroethylene (PTFE), tetrafluoroethylene-hexafluoropropylene copolymers (FEP), tetrafluoroethylene-perfluoroalkylvinylether copolymers (PFA), and the like.

[Gas Diffusion Electrode]

Next, a gas diffusion electrode according to the present invention will be described.

A gas diffusion electrode according to the present invention has a microporous layer 2 on the second surface side of a carbon sheet according to the present invention. The face having a microporous layer is defined as the second surface of a gas diffusion electrode, and the face having no microporous layer is defined as the first surface.

The microporous layer can be formed by coating the second surface of the carbon sheet with ink. The ink is a dispersion medium, such as water or an organic solvent, that has an electrically conductive filler dispersed therein. The ink can contain a dispersant such as a surfactant. The dispersion medium is preferably water, and as the dispersant, a nonionic surfactant is used preferably. In addition, the ink can contain a hydrophobic material.

In addition, in the present invention, the microporous layer preferably contains an electrically conductive filler, and the electrically conductive filler is preferably carbon powder because such a filler is physically and chemically stable.

The carbon sheet can be coated with the ink using any kind of commercially available coating device, and it is also preferable that the coating is followed by drying the ink using drying equipment.

The upper limit of the areal weight of the microporous layer is not particularly limited, and is preferably 50 $g/m^2$ or less, more preferably 30 $g/m^2$ or less, still more preferably 25 $g/m^2$ or less. In addition, the lower limit is preferably 10 $g/m^2$ or more, more preferably 14 $g/m^2$ or more, still more preferably 16 $g/m^2$ or more.

The microporous layer having an areal weight of 10 $g/m^2$ or more makes it possible to cover the whole second surface of the carbon sheet with a microporous layer, to further promote the back-diffusion of generated water, and to further inhibit the dry-out. In addition, the microporous layer having an areal weight of 50 $g/m^2$ or less makes it possible to further enhance the water removal performance, and to further inhibit flooding.

[Membrane Electrode Assembly]

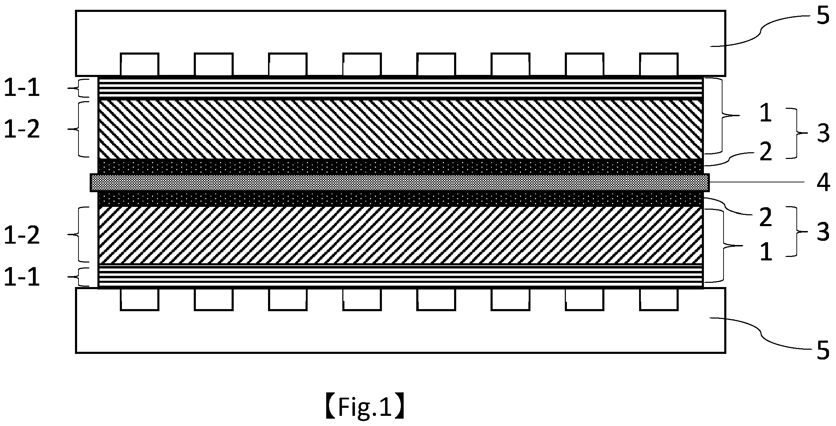

In the present invention, joining the gas diffusion electrode with at least one face of a solid polymer electrolyte membrane having catalyst layers on both faces thereof makes it possible to form a membrane electrode assembly. When this is done, disposing the second surface side of the gas diffusion electrode on the catalyst layer side makes it easier for the back-diffusion of generated water to take place, furthermore increases the area of contact between the catalyst layer and the gas diffusion electrode, can decrease the electrical resistance of contact, and thus, is preferable. The catalyst layer is composed of a layer containing a solid polymer electrolyte and a carbon material of carbon-supported catalyst. As the catalyst, platinum is usually used. As illustrated in FIG. 1, a membrane electrode assembly constituted of a gas diffusion electrode 3 and a catalyst-coated electrolyte membrane 4 is an example in which a gas diffusion electrode according to the present invention is disposed on each of both faces, but it is also possible that a gas diffusion electrode according to the present invention is used on one face only, and that a conventional gas diffusion electrode may be used on the other face.

[Fuel Cell]

A fuel cell according to the present invention contains a gas diffusion electrode according to the present invention as a constituent, and is a fuel cell including a bipolar plate, gas diffusion electrode, catalyst layer, electrolyte membrane, catalyst layer, gas diffusion electrode, and bipolar plate that are laminated in this order. That is, a fuel cell is constituted by disposing bipolar plates 5 on both sides of the membrane electrode assembly, as in FIG. 1. The bipolar plate is a plate-like member as a good electric conductor of metal or graphite, has channels formed in a face of the bipolar plate, namely the face in contact with the membrane electrode assembly, and plays a role in exchanging electricity between the gas diffusion electrode and an external circuit, and in making it possible to supply a fuel gas or an oxidizing gas and to remove generated water. The bipolar plate to be used has a plurality of straight-line channels arranged in parallel in the face and used as gas flow channels to distribute a fuel gas throughout the whole face of the gas diffusion electrode. Examples of the structure of the gas flow channels include a parallel-channel type of structure and a winding-channel type (serpentine type) of structure.

For a fuel cell according to the present invention, it is preferable that, when the carbon sheet is disposed at the bipolar plate side, the fiber orientation direction in the first surface of the carbon sheet is substantially perpendicular to the direction of the gas flow channels provided in the bipolar plate. Here, in a case where the gas flow channels of the bipolar plate have a plurality of different directions, the direction of the gas flow channels having the highest ratio of occupancy is regarded as the direction of the gas flow channels of the bipolar plate. Such an arrangement makes it less likely that the gas diffusion electrode is deflected into the gas flow channels provided in the bipolar plate, making it possible to prevent the pressure loss of a fuel gas flowing in the bipolar plate, and to efficiently supply the fuel gas throughout the whole surface of the gas diffusion electrode. A polymer electrolyte fuel cell is usually constituted of a lamination of a plurality of such membrane electrode assemblies that are each sandwiched between bipolar plates via a gasket at both sides.

EXAMPLES

Next, the present invention will be specifically described with reference to Examples. Methods of producing the materials, carbon sheets (a carbon fiber papermaking substrate and a carbon fiber sintered substrate), and a gas diffusion electrode used in Examples will be described below.

<Production of Carbon Fiber Papermaking Substrate>

To 100 parts by mass of ion-exchanged water, 0.01 part by mass of a defoamer agent KM-73 (manufactured by Shin-Etsu Chemical Co., Ltd.), 0.01 part by mass of a thickening agent "NOPTEX (registered trademark)" E-R060 (manufactured by San Nopco Co., Ltd.), and 0.01 part by mass of a surfactant "ALKOX (registered trademark)" CP-B1 (manufactured by Meisei Chemical Works, Ltd.) were added, and the resulting mixture was stirred with a disperser for 10 minutes to prepare an aqueous solution for dispersion.

Next, 0.15 part by mass of a PAN-based carbon fiber "TORAYCA (registered trademark)" T300 (manufactured by Toray Industries, Inc.) (having an average monofilament diameter of 7 $\mu$m) cut out to a length of 6 mm was added to 100 parts by mass of the aqueous solution for dispersion, and the resulting mixture was stirred with a disperser for 5 minutes to prepare a slurry. Next, the slurry obtained was used to make paper using a papermaking machine having ten slurry outlets disposed in the height direction, as illustrated in FIG. 6. When fed from the disperser to each slurry outlet, the slurry obtained is diluted with the aqueous solution for dispersion in each pipe to adjust the concentration of the slurry in each pipe so that the same degree of areal weight can be obtained at the below-described respective different jet-to-wire speed ratios. Next, the flow rate of the slurry was adjusted to obtain an intended jet-to-wire speed ratio at each slurry outlet, and the slurry diluted was fed from each slurry outlet to an inclined paper machine to make paper continuously. When this was done, the separation of the fibers in the slurry was facilitated, using a dehydration mechanism provided in the lower portion of the wire mesh of papermaking. In this regard, the slurry outlet disposed at the top of the papermaking machine was named the 1st slurry outlet, and the slurry outlet at the bottom of the papermaking machine was named the 10th slurry outlet. Furthermore, an aqueous solution of 10 mass% polyvinyl alcohol, as a binder resin, was applied to the wet paper discharged out of the papermaking machine, and dried under heating at 180°C for 2 minutes to produce a continuous carbon fiber papermaking substrate. The amount of the polyvinyl alcohol applied was 22 parts by mass with respect to 100 parts by mass of the carbon fiber papermaking substrate.

<Production of Hydrophobically-treated Carbon Fiber Sintered Substrate>

Ten parts by mass of a resin mixture obtained by mixing a thermosetting resin (a resol type phenolic resin KP-743K (manufactured by Arakawa Chemical Industries, Ltd.) and a novolak type phenolic resin "TAMANOL (registered trademark)" 759 (manufactured by Arakawa Chemical Industries, Ltd.) at a mass ratio of 1:1), 5 parts by mass of a flake graphite BF-5A (having an average particle diameter of 5 $\mu$m and an aspect ratio of 1:5) manufactured by Chuetsu Graphite Works Co., Ltd., and 85 parts by mass of a solvent (methanol) were mixed, and the resulting mixture was stirred for 1 minute using an ultrasonic dispersing device to obtain a uniformly dispersed resin composition.

Next, a continuous carbon fiber papermaking substrate was continuously dipped in a vessel filled with an impregnating liquid of the resin composition, and sandwiched between two rolls to adjust the adhering amount of the resin. When this was done, a given clearance was provided between two rolls, through which clearance the prepreg was allowed to pass, whereby the adhering amount of the whole resin composition was adjusted. In addition, in this constitution, one of the two rolls was a smooth metal roll, and the other roll was a rough gravure roll. The metal roll was disposed at one surface side of the prepreg, and the gravure roll was disposed at the other surface side, between which rolls the prepreg was passed through to have a difference in the adhering amount of the resin composition between the one surface of the prepreg and the other surface. Then, the prepreg was dried under heating at a temperature of 100°C for 5 minutes to produce the resulting prepreg. Next, the prepreg was continuously heated and pressed at a temperature of 180°C for a total of 5 minutes, during which the prepreg was transported in stages, and simultaneously pressurized and heated with hot platens in parallel with each other.

This prepreg heated and pressed was introduced into a heating furnace which held a nitrogen gas atmosphere and the highest temperature of which was 2400°C. A carbon fiber sintered substrate was thus obtained.

The carbon sheet (carbon fiber sintered substrate) produced as above-described was cut to 15 cm × 12.5 cm, and dipped in a water dispersion liquid of polytetrafluoroethylene resin (a water dispersion liquid of "POLYFLON (registered trademark)" PTFE Dispersion D-201C (manufactured by Daikin Industries, Ltd.)) to impregnate the carbon fiber sintered substrate with the hydrophobic material. Then, the resulting carbon fiber sintered substrate was dried under heating at a temperature of 100°C in a drying furnace for 5 minutes to produce a carbon fiber sintered substrate hydrophobically treated to have a uniformly adhering hydrophobic material. The resulting substrate was used as a carbon sheet in the following

<Production of Gas Diffusion Electrode>.

<Production of Gas Diffusion Electrode>

To 100 parts by mass of ion-exchanged water, 9.2 parts by mass of carbon powder "DENKA BLACK (registered trademark)" (manufactured by Denka Company Limited), 5.5 parts by mass of a water-repellent agent "POLYFLON (registered trademark)" PTFE Dispersion D-1E (a water dispersion liquid containing 60 parts by mass of PTFE resin, manufactured by Daikin Industries, Ltd.), and 18.5 parts by mass of a surfactant "TRITON (registered trademark)" X-100 (manufactured by Nacalai Tesque, Inc.) were added, and mixed using a disperser to form a filler-containing ink. This filler-containing ink was applied to the whole of the second surface of the hydrophobically-treated carbon sheet, using a slit die coater, and then heated at a temperature of 120°C for 10 minutes, and subsequently at a temperature of 380°C for 10 minutes. In this manner, a microporous layer was formed on the second surface side of the hydrophobically-treated carbon sheet to produce a gas diffusion electrode.

<Measurement of Areal Weight of Carbon Sheet and Gas Diffusion Electrode>

A carbon sheet or gas diffusion electrode for measurement was cut to 10 cm square to provide a sample, the mass [g] of which was divided by the area (0.01 $m^2$) of the sample to determine the areal weight.

<Measurement of Pressed Thickness of Carbon Sheet and Gas Diffusion Electrode>

The carbon sheet or gas diffusion electrode for measurement was placed on a smooth surface plate, and using a constant-pressure thickness gauge, a difference in the height was measured between the presence of the measuring object (carbon sheet or gas diffusion electrode) under a pressure of 0.15 MPa and the absence of the measuring object. Ten samples were taken from different parts, and the average of the measured values of the differences in the height was regarded as a pressed thickness.

<Measurement of Mean Diameter of Monofilament of Carbon Fibers>

The mean diameter of the monofilaments of the carbon fibers was determined as follows: the carbon fibers in one surface of the carbon sheet were magnified 1000 times under a microscope such as a scanning electron microscope, and photographed; different 30 monofilaments were randomly selected; the diameters of the monofilaments were measured; and the average of the measured values was calculated. In addition, the mono filaments of the carbon fibers in the other surface of the carbon sheet were also measured in the same manner. The scanning electron microscope used was S-4800, manufactured by Hitachi, Ltd.

<Measurement of Fiber Orientation and Filling Rate>

In accordance with the procedures described in [Measuring Procedures for Fiber Orientation and Filling Rate] above, the degree of fiber orientation, the fiber orientation angle, and the filling rate were measured.

<Measurement of Electrical Resistance of Gas Diffusion Electrode>

Using the electrical resistance testing mode of "AUTOGRAPH (registered trademark)" AGS-X manufactured by Shimadzu Corporation, the electrical resistance under pressing was measured. A sample cut to 22.4 mm square from the gas diffusion electrode was placed, with the microporous layer facing upward, between two electric resistance measurement jigs, upper and lower, attached 20.0 cm apart from each other. The upper electrical resistance measurement jig was brought down to apply a load until the load reached 1.0 MPa. After the load reached a predetermined value, an electric current of 1.0 ampere was applied using a DC power supply connected to the electrical resistance measurement jigs. After the electric current was applied, the value of a voltage on the digital multi-meter was read at a stage at which 20 seconds elapsed, and the value of electrical resistance was calculated from the measured value and the measured area.

In the present invention, the performance was evaluated using an electrical resistance value of 7 m$\Omega \cdot$cm$^2$ as a reference value.

<Measurement of Deflection of Gas Diffusion Electrode>

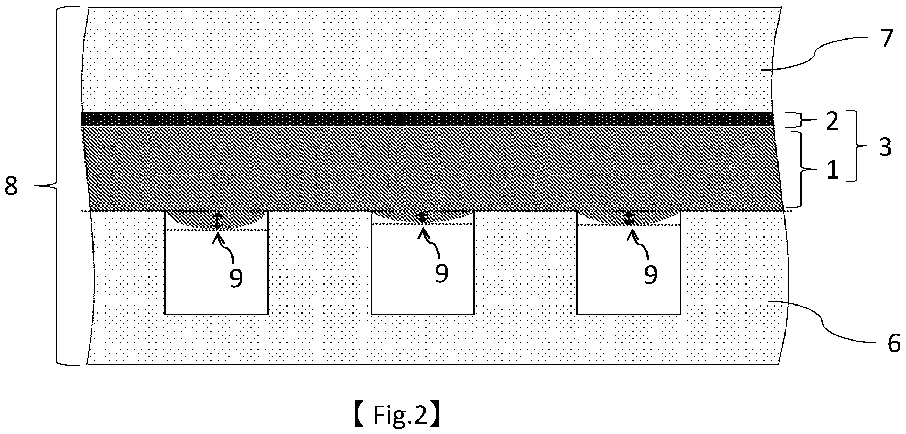

As in FIG. 2, a gas diffusion electrode (3 cm square) having a microporous layer formed therein was disposed, with the layer side facing upward, on the channeled face of a channeled block 6 (3 cm square) the face of which had 15 channels that each had a rib width of 1 mm, a channel width of 1 mm, and a depth of 1 mm. Furthermore, a plane block 7 (3 cm square) was placed on the gas diffusion electrode to provide a compression unit 8 in which the gas diffusion electrode was sandwiched between the two kinds of blocks. The compression unit was set between the planar jigs of a universal tester (AGX-5kN manufactured by Shimadzu Corporation), in which the planar jigs were set in the respective upper and lower portions. The compression unit was compressed and held under a load having an average pressure of 1 MPa against the gas diffusion electrode. Through a side face of the compression unit, the gas diffusion electrode was photographed under a digital microscope at a multiplying factor such that the width of visual field was 1.5 to 2.0 mm. On the analysis screen of the digital microscope, the length of a perpendicular line from the rib surface as a reference to the maximum portion of deflection into a channel was measured as a deflected amount 9 [$\mu$m]. Three of the 15 channels were measured per gas diffusion electrode, and the same test was performed on six gas diffusion electrodes. The deflected amounts at a total of 18 points were measured, and the average of the measured values was used for evaluation.

In the present invention, the performance of a gas diffusion electrode was evaluated, using the average deflected amount of 50 $\mu$m as a reference.

(Example 1)

In accordance with the method described in <Production of Carbon Fiber Papermaking Substrate> above, the wire mesh of papermaking of the inclined paper machine was driven at a papermaking rate of 5 m/min. A slurry obtained by suitably diluting the original slurry was fed to the 1st slurry outlet at 0.07 m$^3$/min, and a slurry obtained by suitably diluting the original slurry was fed to the 2nd to 9th slurry outlets at 0.10 m$^3$/min. A carbon fiber papermaking substrate having an areal weight of 30 g/m$^2$ and a pressed thickness of 250 $\mu$m was thus obtained. The carbon fiber papermaking substrate obtained was treated in accordance with the method described in <Production of Hydrophobically-treated Carbon Fiber Sintered Substrate> above to obtain a carbon sheet having an areal weight of 45 g/m$^2$ and a pressed thickness of 150 $\mu$m. The degree of fiber orientation and degree of filling of the carbon sheet obtained in this manner and the distribution of the degrees are as in Table 1. Furthermore, using the carbon sheet obtained here, a gas diffusion electrode having an areal weight of 62 g/m$^2$ and a pressed thickness of 160 $\mu$m was obtained in accordance with the method described in <Production of Gas Diffusion Electrode> above. The gas diffusion electrode obtained was measured in accordance with the methods described in <Measurement of Electrical Resistance of Gas Diffusion Electrode> and <Measurement of Deflection of Gas Diffusion Electrode> above. This gas diffusion electrode had an electrical resistance of 6.0 m$\Omega \cdot$cm$^2$ and a deflected amount of 42 $\mu$m, which were both good.

(Examples 2 to 4)

A gas diffusion electrode was produced in the same manner as in Example 1 except that, in <Production of Carbon Fiber Papermaking Substrate> above, the concentration of the slurry and the amount of the slurry fed were adjusted suitably to change the ratio of the thickness of the first surface side region and the second surface side region to the thickness of the whole carbon sheet. In each Example, the gas diffusion electrode had an electrical resistance of 7 m$\Omega \cdot$cm$^2$ or less and a deflected amount of 50 $\mu$m or less, which were both good.

(Examples 5 to 7)

A gas diffusion electrode was produced in the same manner as in Example 1 except that, in <Production of Carbon Fiber Papermaking Substrate> above, the concentration of the slurry and the amount of the slurry fed were adjusted suitably to change the degree of fiber orientation of the first surface side outermost layer. In each Example, the gas diffusion electrode had an electrical resistance of 7 mΩ·cm² or less and a deflected amount of 50 μm or less, which were both good.

(Examples 8 and 9)

A gas diffusion electrode was produced in the same manner as in Example 1 except that, in <Production of Carbon Fiber Papermaking Substrate> above, the concentration of the slurry and the amount of the slurry fed were adjusted suitably to change the degree of fiber orientation of the first surface side outermost layer and the average of the degree of fiber orientation of the second surface side region. In each Example, the gas diffusion electrode had an electrical resistance of 7 mΩ·cm² or less and a deflected amount of 50 μm or less, which were both good.

(Example 10)

A gas diffusion electrode was produced in the same manner as in Example 8 except that, in <Production of Carbon Fiber Papermaking Substrate> above, the concentration of the slurry and the amount of the slurry fed were adjusted suitably to change the ratio of the thickness of the first surface side region and the second surface side region to the thickness of the whole carbon sheet, and to change the average of the degree of fiber orientation of the second surface side region. This gas diffusion electrode had an electrical resistance of 6.6 mtΩ·cm² and a deflected amount of 37 μm, which were both good.

(Example 11)

A gas diffusion electrode was produced in the same manner as in Example 9 except that, in <Production of Carbon Fiber Papermaking Substrate> above, the concentration of the slurry and the amount of the slurry fed were adjusted suitably to change the ratio of the thickness of the first surface side region and the second surface side region to the thickness of the whole carbon sheet, and to change the average of the degree of fiber orientation of the second surface side region. This gas diffusion electrode had an electrical resistance of 6.7 mΩ·cm² and a deflected amount of 35 μm, which were both good.

(Example 12)

A gas diffusion electrode was produced in the same manner as in Example 1 except that, in <Production of Hydrophobically-treated Carbon Fiber Sintered Substrate> above, the impregnation with the resin was performed using metal rolls as the two rolls, and that the filling rate of the bonding material was the same between the first surface side and the second surface side. This gas diffusion electrode had an electrical resistance of 6.0 mΩ·cm² and a deflected amount of 44 μm, which were both good.

(Example 13)

A gas diffusion electrode was produced in the same manner as in Example 1 except that, in <Production of Hydrophobically-treated Carbon Fiber Sintered Substrate> above, the clearance between the two rolls was suitably adjusted to increase the difference of the filling rate of the bonding material between the multilayer body X and the multilayer body Y. This gas diffusion electrode had an electrical resistance of 6.1 mΩ·cm² and a deflected amount of 39 μm, which were both good.

(Example 14)

A gas diffusion electrode was produced in the same manner as in Example 1 except that, in <Production of Hydrophobically-treated Carbon Fiber Sintered Substrate> above, the impregnation with the resin was performed with the two rolls replaced with each other to invert the higher-lower relation of the filling rate between the multilayer body X and the multilayer body Y. This gas diffusion electrode had an electrical resistance of 6.2 mΩ·cm² and a deflected amount of 44 μm, which were both good.

(Comparative Example 1)

A gas diffusion electrode was produced in the same manner as in Example 1 except that, in <Production of Carbon Fiber Papermaking Substrate> above, the concentration of the slurry and the amount of the slurry fed were adjusted suitably to change the degree of fiber orientation of the first surface side outermost layer. This gas diffusion electrode had an electrical resistance of 5.1 mΩ·cm$^2$, which was good, but had a deflected amount of 54 μm, resulting in having insufficient performance. In addition, there was a problem in that the degree of fiber orientation was low, and thus, the strength was low, causing breaking due to tension during processing.

(Comparative Example 2)

A gas diffusion electrode was produced in the same manner as in Example 1 except that, in <Production of Carbon Fiber Papermaking Substrate> above, the concentration of the slurry and the amount of the slurry fed were adjusted suitably to change the degree of fiber orientation of the first surface side outermost layer, the degree of fiber orientation of the second surface side outermost layer, and the average degree of orientation of the second surface side region. This gas diffusion electrode had an electrical resistance of 5.3 mΩ·cm$^2$, which was good, but had a deflected amount of 52 μm, resulting in having insufficient performance. As with Comparative Example 1, there was a problem in that the degree of fiber orientation was low, and thus, the strength was low, causing breaking due to tension during processing.

(Comparative Example 3)

A gas diffusion electrode was produced in the same manner as in Example 1 except that, in <Production of Carbon Fiber Papermaking Substrate> above, the concentration of the slurry and the amount of the slurry fed were adjusted suitably to change the degree of fiber orientation of the first surface side outermost layer and the average degree of orientation of the second surface side region. This gas diffusion electrode had a deflected amount of 31 μm, which was extremely good, but had an electrical resistance of 8.0 mΩ·cm$^2$, resulting in having insufficient performance. In addition, the degree of fiber orientation of the first surface side region of the carbon sheet was high, and thus made the gas diffusion electrode prone to curl a little in the direction vertical to the orientation direction, causing small difficulties with handleability during processing.

(Comparative Example 4)

A gas diffusion electrode was produced in the same manner as in Example 1 except that, in <Production of Carbon Fiber Papermaking Substrate> above, the concentration of the slurry and the amount of the slurry fed were adjusted suitably to keep the degree of fiber orientation of the whole sheet constant at 1.10. This gas diffusion electrode had an electrical resistance of 5.0 mΩ·cm$^2$, which was good, but had a deflected amount of 55 μm, resulting in having insufficient performance. As with Comparative Example 1, there was a problem in that the degree of fiber orientation was low, and thus, the strength was low, causing frequent breaking due to tension during processing.

(Comparative Example 5)

A gas diffusion electrode was produced in the same manner as in Example 1 except that, in <Production of Carbon Fiber Papermaking Substrate> above, the concentration of the slurry and the amount of the slurry fed were adjusted suitably to keep the degree of fiber orientation of the whole sheet constant at 3.10. This gas diffusion electrode had a deflected amount of 28 μm, which was extremely good, but had an electrical resistance of 9.5 mΩ·cm$^2$, which was extremely poor, resulting in having insufficient performance. In addition, the degree of fiber orientation of the whole carbon sheet was high, and thus made the gas diffusion electrode extremely prone to curl in the direction vertical to the orientation direction, causing considerable difficulties with ease of handling during processing.

(Comparative Example 6)

A gas diffusion electrode was produced in the same manner as in Example 1 except that, in <Production of Carbon Fiber Papermaking Substrate> above, the concentration of the slurry and the amount of the slurry fed were adjusted suitably to change the ratio of the thickness of the first surface side region and the second surface side region to the thickness of the whole carbon sheet. This gas diffusion electrode had a deflected amount of 37 μm, which was a little good, but had an electrical resistance of 7.5 mΩ·cm$^2$, which was a little poor, resulting in having insufficient performance. The electrical resistance was worsened presumably because the ratio of the first surface side region was increased with respect to the thickness of the whole carbon sheet.

(Comparative Example 7)

A gas diffusion electrode was produced in the same manner as in Example 1 except that, in <Production of Carbon Fiber Papermaking Substrate> above, the concentration of the slurry and the amount of the slurry fed were adjusted suitably to change the ratio of the thickness of the first surface side region and the second surface side region to the thickness of the whole carbon sheet. This gas diffusion electrode had a deflected amount of 33 $\mu$m, which was good, but had an electrical resistance of 8.3 m$\Omega$·cm$^2$, which was poor, resulting in having insufficient performance. The electrical resistance was further worsened presumably because the ratio of the first surface side region with respect to the thickness of the whole carbon sheet was increased more than in Comparative Example 6.

[Table 1]

| Substrate | | Item | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| | Degree of fiber orientation | First surface side outermost layer | 1.70 | 1.70 | 1.70 | 1.70 | 1.35 | 1.20 | 2.00 | 2.80 | 3.00 | 2.00 | 2.80 |
| | | Second surface side outermost layer | 1.00 | 1.00 | 1.00 | 1.00 | 1.00 | 1.00 | 1.00 | 1.00 | 1.00 | 1.00 | 1.00 |
| | | Difference between first surface side outermost layer and second surface side outermost layer | 0.70 | 0.70 | 0.70 | 0.70 | 0.35 | 0.20 | 1.00 | 1.80 | 2.00 | 1.00 | 1.80 |
| | | Average of second surface side region | 1.00 | 1.05 | 1.10 | 1.00 | 1.00 | 1.00 | 1.00 | 1.05 | 1.10 | 1.12 | 1.15 |
| | | Difference between first surface side outermost layer and average of second surface side region | 0.70 | 0.65 | 0.60 | 0.70 | 0.35 | 0.20 | 1.00 | 1.75 | 1.90 | 0.88 | 1.65 |

(continued)

| Substrate | Item | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Carbon sheet | Difference between second surface side outermost layer and average of second surface side region | | 0.00 | 0.05 | 0.10 | 0.00 | 0.00 | 0.00 | 0.00 | 0.05 | 0.10 | 0.12 | 0.15 |
| | Fiber orientation angle | First surface side outermost layer | 86 | 91 | 95 | 97 | 94 | 84 | 93 | 92 | 94 | 90 | 94 |
| | | Second surface side outermost layer | 92 | 85 | 90 | 89 | 87 | 83 | 84 | 90 | 95 | 82 | 90 |
| | Ratio of thickness of first surface side region to thickness of whole carbon sheet [%] | | 10 | 20 | 40 | 5 | 10 | 10 | 10 | 10 | 10 | 30 | 30 |
| | Filling rate for section divided into two portions [%] | Multilayer body X | 18.4 | 18.4 | 18.7 | 18.1 | 18.6 | 18.2 | 18.5 | 17.9 | 18.4 | 18.5 | 18.2 |
| | | Multilayer body Y | 17.8 | 17.6 | 18.0 | 17.4 | 17.7 | 17.7 | 17.7 | 17.3 | 17.7 | 17.6 | 17.5 |
| | Filling rate for section divided into three | Multilayer body X' | 19.4 | 19.6 | 19.9 | 19.2 | 19.8 | 19.5 | 20.0 | 19.0 | 19.5 | 19.9 | 19.4 |
| | | Multilayer body Y' | 18.2 | 18.1 | 18.5 | 17.9 | 18.1 | 18.4 | 18.4 | 17.8 | 18.2 | 18.1 | 18.1 |

| Substrate | | Item | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| | portions [%] | Multilayer body Z' | 16.5 | 16.0 | 16.3 | 16.1 | 16.4 | 15.7 | 15.5 | 15.9 | 16.2 | 16.0 | 15.8 |
| Gas diffusion electrode | Electrical resistance [m$\Omega \cdot$cm$^2$] | | 6.0 | 6.3 | 6.9 | 5.8 | 5.9 | 5.5 | 6.2 | 6.6 | 6.8 | 6.6 | 6.7 |
| | Average deflected amount [$\mu$m] | | 42 | 41 | 39 | 44 | 46 | 48 | 40 | 39 | 37 | 37 | 35 |

[Table 2]

| Substrate | | Evaluation Item | Example 12 | Example 13 | Example 14 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| | Degree of fiber orientation | First surface side outermost layer | 1.70 | 1.70 | 1.70 | 1.10 | 1.20 | 4.00 | 1.10 | 3.10 | 1.70 | 1.70 |
| | | Second surface side outermost layer | 1.00 | 1.00 | 1.00 | 1.00 | 1.10 | 1.00 | - | - | 1.00 | 1.00 |
| | | Difference between first surface side outermost layer and second surface side outermost layer | 0.70 | 0.70 | 0.70 | 0.10 | 0.10 | 3.00 | - | - | 0.70 | 0.70 |
| | | Average of second surface side region | 1.00 | 1.00 | 1.00 | 1.00 | 1.10 | 1.10 | - | - | 1.00 | 1.20 |
| | | Difference between first surface side outermost layer and average of second surface side region | 0.70 | 0.70 | 0.70 | 0.10 | 0.10 | 2.90 | - | - | 0.70 | 0.50 |

EP 4 317 580 A1

(continued)

| Substrate | | Evaluation Item | Example 12 | Example 13 | Example 14 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Carbon sheet | | Difference between second surface side outermost layer and average of second surface side region | 0.00 | 0.00 | 0.00 | 0.00 | 0.00 | 0.10 | - | - | 0.00 | 0.20 |
| | Fiber orientation angle | First surface side outermost layer | 94 | 84 | 87 | 92 | 85 | 91 | 89 | 92 | 86 | 97 |
| | | Second surface side outermost layer | 88 | 92 | 93 | 97 | 86 | 99 | 96 | 94 | 95 | 96 |
| | Ratio of thickness of first surface side region to thickness of whole carbon sheet [%] | | 10 | 10 | 10 | 10 | 10 | 10 | 100 | 100 | 50 | 95 |
| | Filling rate for section divided into two portions [%] | Multilayer body X | 17.4 | 19.0 | 17.5 | 18.3 | 18.5 | 18.3 | 18.6 | 18.8 | 18.1 | 18.4 |
| | | Multilayer body Y | 17.4 | 17.0 | 18.2 | 17.7 | 17.7 | 17.6 | 18.0 | 18.1 | 17.6 | 17.6 |
| | Filling rate for | Multilayer body X' | 18.1 | 20.9 | 18.1 | 19.4 | 19.6 | 19.3 | 19.8 | 20.0 | 19.4 | 19.7 |

EP 4 317 580 A1

(continued)

| | Evaluation Item | | Example 12 | Example 13 | Example 14 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|
| Substrate | section divided into three portions [%] | Multilayer body Y' | 18.1 | 17.1 | 19.5 | 18.2 | 18.1 | 18.1 | 18.4 | 18.5 | 18.3 | 18.1 |
| | | Multilayer body Z' | 15.7 | 15.8 | 15.6 | 16.1 | 16.3 | 16.2 | 16.4 | 16.6 | 15.6 | 16.1 |
| Gas diffusion electrode | Electrical resistance [mΩ·cm²] | | 6.0 | 6.1 | 6.2 | 5.1 | 5.3 | 8.0 | 5.0 | 9.5 | 7.5 | 8.3 |
| | Average deflected amount [μm] | | 44 | 39 | 44 | 54 | 52 | 31 | 55 | 28 | 37 | 33 |

Industrial Applicability

A carbon sheet according to the present invention is suitably used for a fuel cell, particularly a polymer electrolyte fuel cell.

Reference Signs List

1: Carbon Sheet
1-1: First Surface Side Region
1-2: Second Surface Side Region
2: Microporous Layer
3: Gas Diffusion Electrode
4: Catalyst-coated Electrolyte Membrane
5: Bipolar Plate
6: Channeled Block
7: Planar Block
8: Compression Unit
9: Deflected Amount
10: Thickness Direction of Carbon Sheet
11: First Surface Side
12: Second Surface Side
13: Plane Having Filling Rate of 50% nearest to First Surface
14: Plane Having Filling Rate of 50% nearest to Second Surface
15: Filling Rate of 50%
16: Distribution of Filling Rate
17: 20 Layers
18: Distribution of Degree of Fiber Orientation
19: Multilayer Body X
20: Multilayer Body Y
21: Slurry Outlet
22: Partition Plate
23: Wire Mesh of Papermaking
24: Wet Paper

**Claims**

1. A carbon sheet comprising a first surface and a second surface located at the opposite side to said first surface;

    wherein, assuming that a section from a plane having a filling rate of 50% nearest to said first surface to a plane having a filling rate of 50% nearest to said second surface is equally divided into 20 portions in the thickness direction to form 20 layers, the degree of fiber orientation of said first surface side outermost layer of said 20 layers is 1.20 or more and 3.00 or less; and
    wherein, assuming that a region composed of consecutive layers included in said 20 layers and having a degree of fiber orientation having a difference within ±0.10 from the degree of fiber orientation of said first surface side outermost layer is a first surface side region, and that a region composed of a layer(s) included in said 20 layers but not included in said first surface side region is a second surface side region, the thickness of said first surface side region is 40% or less of the thickness of the whole carbon sheet, and a difference between the average degree of fiber orientation of said second surface side region and the degree of fiber orientation of said first surface side outermost layer is larger than 0.10
    (wherein said filling rate of 50% refers to a value that is 50% of the average of filling rates of planes, wherein said filling rates of planes are measured at 3.9 μm intervals from one surface of said carbon sheet to the other surface, and said average is then determined from the filling rates obtained; and furthermore, the filling rate of a layer refers to the average of values obtained using said filling rates of planes forming said layer).

2. The carbon sheet according to claim 1, wherein a difference between the fiber orientation angle of said first surface side outermost layer and the fiber orientation angle of said second surface side outermost layer is within 45°.

3. The carbon sheet according to claim 1 or 2, wherein, assuming that said section from the plane having a filling rate of 50% nearest to said first surface to the plane having a filling rate of 50% nearest to said second surface is equally divided into two portions in the thickness direction to form two multilayer bodies, and that the first surface side multilayer body is a multilayer body X, and the second surface side multilayer body is a multilayer body Y, the filling rate of said multilayer body Y is lower than the filling rate of said multilayer body X.

4. The carbon sheet according to any one of claims 1 to 3, composed of a carbon fiber papermaking substrate and a bonding material.

5. The carbon sheet according to any one of claims 1 to 4, wherein the average degree of orientation of said second surface side region is 1.20 or less.

6. A gas diffusion electrode comprising a microporous layer on the second surface side of said carbon sheet according to any one of claims 1 to 5.

7. A fuel cell comprising said gas diffusion electrode according to claim 6 as a constituent, and comprising a bipolar plate, gas diffusion electrode, catalyst layer, electrolyte membrane, catalyst layer, gas diffusion electrode, and bipolar plate that are laminated in this order.

8. The fuel cell according to claim 7, wherein, when said carbon sheet is disposed at the bipolar plate side, the fiber orientation direction in the first surface of said carbon sheet is substantially perpendicular to the direction of gas flow channels provided in said bipolar plate.

9. A method of producing a carbon sheet, comprising: a mixing process of dispersing carbon fiber bundles uniformly in a liquid to obtain a slurry; and a papermaking process of overlapping the carbon fibers at least continuously, and simultaneously making paper from said slurry containing said carbon fibers, using a papermaking machine having a mechanism that can control the orientation in the thickness direction.

10. A method of producing a carbon sheet, comprising: a resin impregnation process of adding a resin to a carbon sheet obtained by said method of producing a carbon sheet according to claim 9; a heating and pressing process of adjusting the thickness by heating and pressing; and a baking process of carbonizing said carbon sheet having said resin added thereto.

[Fig.1]

EP 4 317 580 A1

【Fig.2】

【 Fig.3 】

【Fig.4】

【 Fig.5 】

EP 4 317 580 A1

【 Fig.6 】

EP 4 317 580 A1

## INTERNATIONAL SEARCH REPORT

| International application No. |
|---|
| **PCT/JP2022/012511** |

**A. CLASSIFICATION OF SUBJECT MATTER**

*D21H 13/50*(2006.01)i; *D04H 1/4242*(2012.01)i; *H01M 4/96*(2006.01)i
FI:  D21H13/50; D04H1/4242; H01M4/96 M

According to International Patent Classification (IPC) or to both national classification and IPC

**B. FIELDS SEARCHED**

Minimum documentation searched (classification system followed by classification symbols)

D21B1/00-D21J7/00; D04H1/00-18/04; H01M4/86-4/98

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2017/0301923 A1 (JNTG CO., LTD.) 19 October 2017 (2017-10-19) paragraphs [0072]-[0078], fig. 2, abstract | 9-10 |
| A | | 1-8 |
| X | KR 10-2016-0120060 A (JNTG CO., LTD.) 17 October 2016 (2016-10-17) example 1, abstract | 9-10 |
| A | | 1-8 |
| A | JP 2018-26343 A (TORAY INDUSTRIES, INC.) 15 February 2018 (2018-02-15) | 1-10 |
| A | JP 2011-198520 A (JAPAN GORE INC.) 06 October 2011 (2011-10-06) | 1-10 |
| A | JP 2013-191435 A (NISSAN MOTOR CO., LTD.) 26 September 2013 (2013-09-26) | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 May 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/012511**

| Patent document cited in search report | | | Publication date (day/month/year) | Patent family member(s) | | | Publication date (day/month/year) |
|---|---|---|---|---|---|---|---|
| US | 2017/0301923 | A1 | 19 October 2017 | EP | 3232499 | A1 | |
| | | | | KR | 10-2017-0118545 | A | |
| | | | | CN | 107302097 | A | |
| KR | 10-2016-0120060 | A | 17 October 2016 | (Family: none) | | | |
| JP | 2018-26343 | A | 15 February 2018 | (Family: none) | | | |
| JP | 2011-198520 | A | 06 October 2011 | (Family: none) | | | |
| JP | 2013-191435 | A | 26 September 2013 | (Family: none) | | | |

Form PCT/ISA/210 (patent family annex) (January 2015)

33

**EP 4 317 580 A1**

**REFERENCES CITED IN THE DESCRIPTION**

**Patent documents cited in the description**

- JP 2006222024 A
- US 20170301923 A1
- JP 2013191435 A
- KR 20160120060 A